# EUROPEAN PATENT APPLICATION

(11) **EP 2 754 585 A1**
(43) Date of publication of application: **16.07.2014**
(21) Application number: 13150677.6
(22) Date of filing: 09.01.2013
(51) Int. Cl.: B60R 11/04, H04N 5/225

(54) **Vehicular video-recording module**

(71) Applicant: Tung Thih Electronic Co., Ltd., Taoyuan County (TW)
(72) Inventor: Lin, Yih-Jyh, Luchu Township Taoyuan County (TW); Chen, Yan-Ting, Luchu Township Taoyuan County (TW); Shieh, Po-Zong, Luchu Township Taoyuan County (TW)
(74) Representative: Pallini Gervasi, Diego

(57) **Abstract**

A flat vehicular video-recording module has a housing (10) being transversely elongated and having a circuit board (20) therein. The housing (10) further has a photo-sensing element (21) thereon to align with the circuit board (20), a connector assembly (40) extending outwards from the housing (10) and sticking plasters (140) thereon. Given the foregoing structural design, the video-recording module can be effectively reduced in thickness and can be applied to a vehicle with narrow space available inside the vehicle, thereby rendering higher flexibility in mounting and design.

## Description

### 1. Field of the Invention

The present invention relates to a video-recording module and more particularly to a flat vehicular video-recording module.

### 2. Description of the Related Art

Video-recording modules are one of the popular electronic devices with which vehicles are equipped, and can be mounted on bodies of vehicles to record video of surrounding environment to reduce blind spot and increase driving safety upon driving.

Currently, a conventional vehicular video-recording module has a housing, and an image-recording circuit board and a lens mounted inside the housing. The image-recording circuit board has a photo-sensing element mounted thereon. The lens is mounted on the housing to face the photo-sensing element. The housing has a wire and a power supply printed circuit board (PCB). The wire is mounted in the housing and extends outwards. The wire has a connector connected with one end thereof. The power supply PCB is mounted on the wire and is a flexible PCB mounted around the wire with adhesive covered on the power supply PCB for the power supply PCB to be firmly fastened on the wire and to be waterproof. The housing further has waterproof seal rings mounted in openings of the housing to prevent external moisture from entering the housing.

However, the conventional vehicular video-recording module is relatively thick as a whole due to its internal structural design and cannot be mounted in a narrow space.

An objective of the present invention is to provide a flat vehicular video-recording module being thinned and capable of being mounted in a narrow space inside a vehicle.

To achieve the foregoing objective, the vehicular video-recording module has a housing, a circuit board, a lens and a connector assembly.

The housing is flat and has a top cover and a bottom cover. The top cover has a top, two lateral sides, a front side, an open bottom, a lens-mounting portion, two side wings and a first connection interface. The lens-mounting portion is formed on the top of the top cover opposite to the open bottom. The two side wings are formed on and protrude transversely from the respective lateral sides of the top cover. Each side wing has a sticking plaster formed on a top of the side wing. The first connection interface is mounted on the front side of the top cover.

The bottom cover is mounted in the open bottom of the top cover and has a top.

The circuit board is mounted inside the housing, is located between the top cover and the bottom cover, and has a photo-sensing element and a protection shield mounted on the circuit board.

The lens is mounted in the lens-mounting portion of the housing and is aligned with the photo-sensing element on the circuit board.

The connector assembly has a second connection interface, a connection cord and a plug electrically connected to one another. The second connection interface is connected to the first connection interface of the housing.

Preferably, the lens-mounting portion has a receiving chamber, a mounting hole and a flange wall. The receiving chamber is formed in the top of the top cover and is defined by a wall. The mounting hole is a threaded hole and is formed through the receiving chamber and the top cover to communicate with the open bottom of the top cover. The flange wall is formed on and protrudes upwardly from a top of the wall of the receiving chamber. The lens has an assembly part and a lens-fixing ring. The assembly part is formed on one end of the lens, is externally threaded, and engages the mounting hole of the lens-mounting portion so that the lens is located within the receiving chamber. The lens-fixing ring is mounted on the lens and is securely combined with the flange wall of the lens-mounting portion.

Preferably, a sealing adhesive is filled between the lens and the flange wall.

Preferably, an inner wall of the lens-fixing ring and a periphery of the lens are spaced apart from each other by a gap.

Preferably, the bottom cover is rectangular and has four corners, two engagement columns and a foolproof pin. The engagement columns are formed on and protrude upwardly from two opposite corners among the four corners on the top of the bottom cover. The foolproof pin is formed on and protrudes from one of the corners on the top of the bottom cover. The circuit board is rectangular and has four corners, two unfilled corners, and a foolproof hole. The unfilled corners are respectively formed on and recessed inwardly from two opposite corners among the four corners of the circuit board. The foolproof hole is formed through one of the corners of the circuit board. The unfilled corners of the circuit board respectively abut against the engagement columns of the bottom cover, and the foolproof pin of the bottom cover is mounted in the foolproof hole of the circuit board.

Preferably, the bottom cover has a sidewall formed around an edge portion on the top of the bottom cover and being inserted into the open bottom of the top cover to engage the bottom cover and the top cover.

Preferably, the bottom cover has multiple stand-mounting holes formed in a bottom of the bottom cover.

Given the foregoing technical measure, the vehicular video-recording module can be effectively reduced in thickness and can be mounted to a narrow space inside a vehicle, thereby rendering flexibility and convenience in mounting. When being mounted, the vehicular video-recording module can be easily fixed inside the vehicle by sticking the two sticking plasters on corresponding positions or by securely fastening a stand in the vehicle on the bottom cover through the stand-mounting holes. As the protection shield covers the circuit board, external EMI interference to the circuit board can be isolated to ensure a stable operation of the circuit board.

Other objectives, advantages and novel features of the invention will become more apparent from the following detailed description when taken in conjunction with the accompanying drawings.

### IN THE DRAWINGS

Fig. 1 is a perspective view of a vehicular video-recording module in accordance with the present invention;
Fig. 2 is an exploded perspective view of the vehicular video-recording module in Fig. 1;
Fig. 3 is a front view in partial section of the vehicular video-recording module in Fig. 1;
Fig. 4 is an exploded perspective view of a housing of the vehicular video-recording module in Fig. 1; and
Fig. 5 is another perspective view of the vehicular video-recording module in Fig.1.

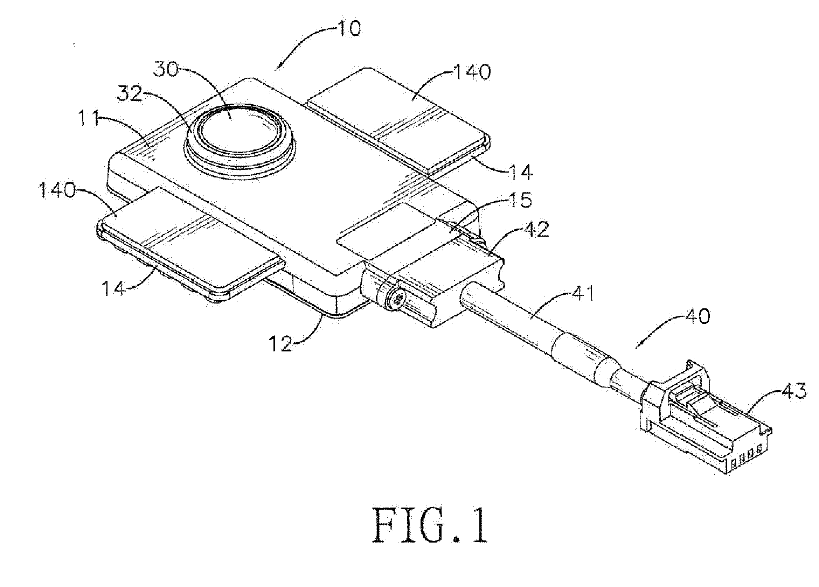

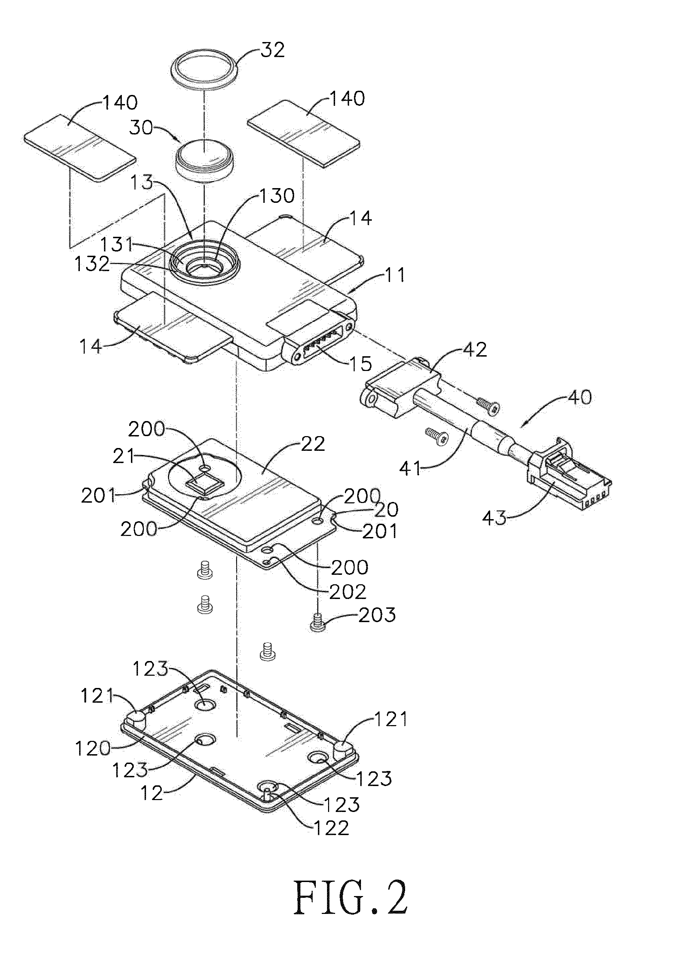

With reference to Figs. 1 and 2, a flat vehicular video-recording module in accordance with the present invention has a housing 10, a circuit board 20, a lens 30 and a connector assembly 40.

The housing 10 is flat and has a top cover 11 and a bottom cover 12.

With reference to Figs. 1 to 4, the top cover 11 is rectangular and hollow, and has an open bottom, a lens-mounting portion 13, two side wings 14 and a first connection interface 15. The lens-mounting portion 13 is formed on a top of the top cover 11 opposite to the open bottom, and has a receiving chamber 131, a mounting hole 130, and a flange wall 132. The receiving chamber 131 is formed in the top of the top cover 11 and is defined by a wall. The mounting hole 130 is a threaded hole and is formed through the bottom of the receiving chamber 131 and the top cover 11 to communicate with the open bottom of the top cover 11. The flange wall 132 is formed on and protrudes upwardly from a top of the wall defining the receiving chamber 131. The side wings 14 are formed on and protrude transversely from two respective lateral sides of the top cover 11, and each side wing 14 has a sticking plaster 140 mounted on a top of the side wing 14. The first connection interface 15 is mounted on a front side of the top cover 11 and has multiple metal terminals mounted in the first connection interface 15 and extending into the top cover 11. The top cover 11 further has four posts formed on the open bottom of the top cover 11. Each post has a threaded hole therein.

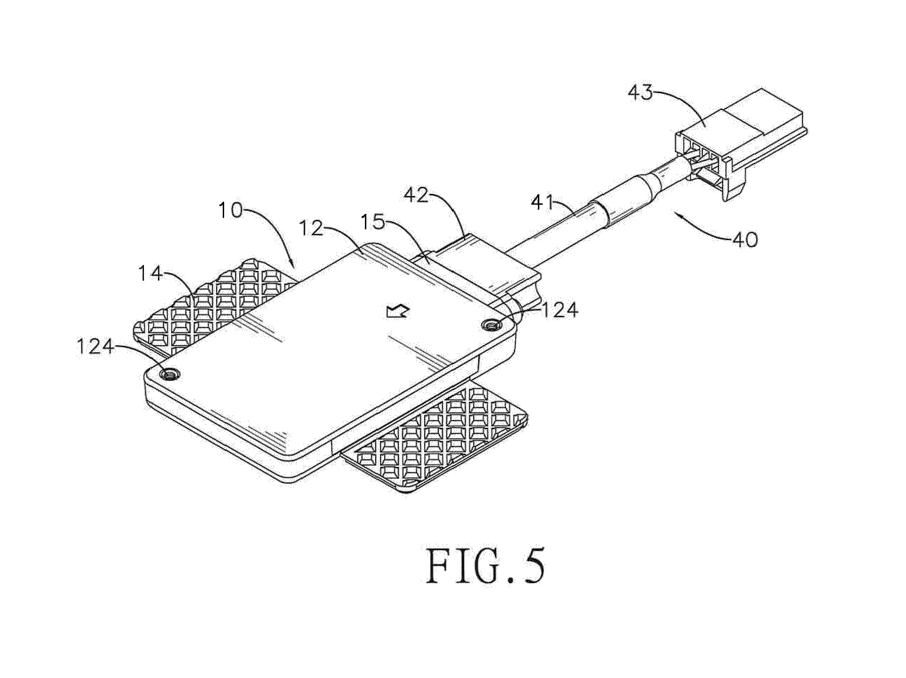

The bottom cover 12 is rectangular and has a sidewall 120, two engagement columns 121, a foolproof pin 122, four indentations 123 and two stand-mounting holes 124. The sidewall 120 is formed around an edge portion on a top of the bottom cover 12. The engagement columns 121 are formed on and protrude upwardly from two opposite corners on the top of the bottom cover 12. The foolproof pin 122 is formed on and protrudes from one of the corners on the top of the bottom cover 12. The indentations 123 are formed in the top of the bottom cover 12 to correspond to the respective posts on the top cover 11. With reference to Fig. 5, the stand-mounting holes 124 are formed in two opposite corners on a bottom of the bottom cover 12. The top cover 11 and the bottom cover 12 are correspondingly assembled together by inserting the sidewall 120 of the bottom cover 12 into the open bottom of the top cover 11. Another way of securely assembling the top cover 11 and the bottom cover 12 may be ultrasonic welding.

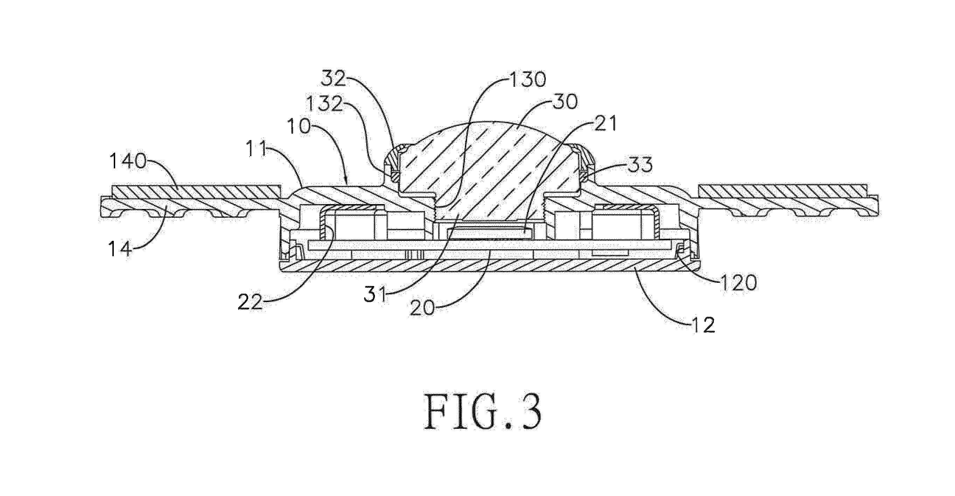

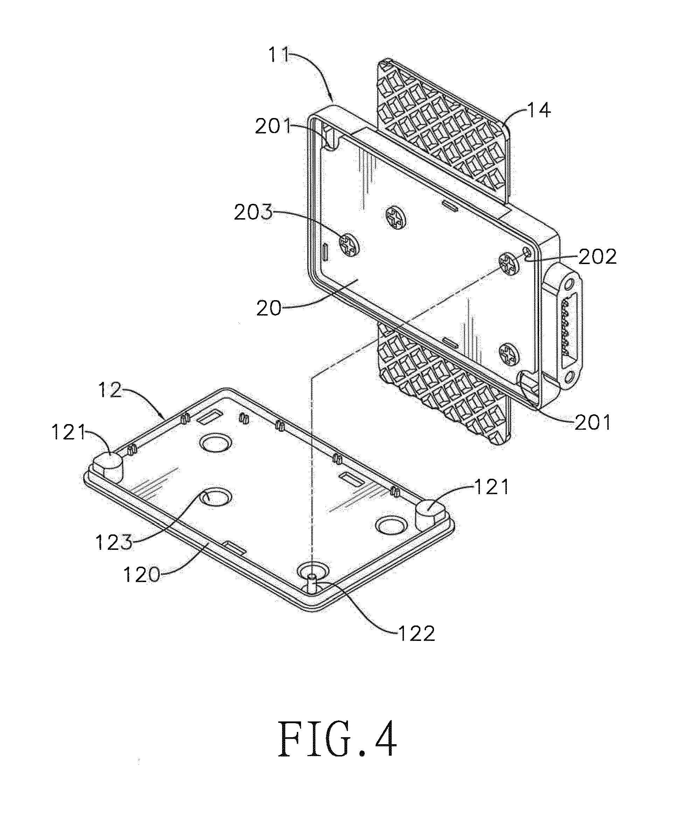

With reference to Fig. 2, the circuit board 20 is rectangular and has a photo-sensing element 21, a protection shield 22, four through holes 200, two unfilled corners 201, a foolproof hole 202 and four fasteners 203. The photo-sensing element 21 is mounted on a top of the circuit board 20. The through holes 200 are formed through the circuit board 20. The unfilled corners 201 are respectively formed on and recessed inwardly from two opposite corners of the circuit board 20. The foolproof hole 202 is formed through one of the rest of corners of the circuit board 20. With reference to Figs. 3 and 4, the circuit board 20 is mounted inside the housing 10 and between the top cover 11 and the bottom cover 12. The unfilled corners 201 respectively abut against the engagement columns 121 of the bottom cover 12. The foolproof pin 122 of the bottom cover 12 is mounted in the foolproof hole 202 of the circuit board 20. The four fasteners 203 sequentially and respectively engage the threaded holes of the four posts on the top cover 11 through the through holes 200, and one end of each fastener 203 abuts against one of the indentations 123.

With reference to Figs. 1 to 3, the lens 30 is aligned with the photo-sensing element 21 and has an assembly part 31. The assembly part 31 is formed on one end of the lens 30 and is externally threaded. When the lens 30 is mounted in the lens-mounting portion 13 of the housing 10, the externally threaded assembly part 31 of the lens 30 engages the internally threaded mounting hole 130 of the lens-mounting portion 13, and the lens 30 is located within the receiving chamber 131. The lens 30 further has a lens-fixing ring 32 mounted on the lens 30 and is securely combined with the flange wall 132 of the lens-mounting portion 13. The way of securely combining the lens-fixing ring 32 and the flange wall 132 may be ultrasonic welding. An inner wall of the lens-fixing ring 32 and a periphery of the lens 30 are spaced apart from each other by a gap. A sealing adhesive 33 is filled between the lens 30 and the flange wall 132.

With reference to Figs. 1 and 2, the connector assembly 40 has a second connection interface 42, a connection cord 41 and a plug 43 electrically connected to one another. The second connection interface 42 is narrow and transversely elongated, is connected to the first connection interface 15 of the housing 10 with fasteners, and has multiple metal terminals therein electrically connected with the respective metal terminals in the first connection interface 15. The plug 43 is connected to the second connection interface 42 through the connection cord 41.

To support the operation of the flat vehicular video-recording module, a connection socket in the vehicle for connecting with the plug 43 of the connector assembly 40 is connected to a vehicular computer in the vehicle. When being mounted, the flat vehicular video-recording module can be fixed inside the vehicle by sticking the two sticking plasters 140 on corresponding positions or by securely fastening a stand in the vehicle on the bottom cover 12 through the stand-mounting holes 124. The plug 43 of the connector assembly 40 is connected with the connection socket for the circuit board 20 to be electrically connected to the vehicular computer in completion of the mounting procedures. As the protection shield 22 covers the circuit board 20, external EMI interference to the circuit board 20 can be isolated to ensure a stable operation of the circuit board. The top cover 10, the bottom cover 12 and the lens-fixing ring 32 can be mutually combined by ultrasonic welding, and the junctions thereof can thus be tightly combined for waterproof assurance without requiring the use of waterproof rubber seal rings. The sealing adhesive 33 between the lens 30 and the receiving chamber 131 can ensure the waterproof protection of the lens 30. Given the foregoing technical approach, the present invention is relatively thinner in profile and can therefore be applied to a vehicle with limited and narrow space therein, thereby rendering higher flexibility in mounting.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A vehicular video-recording module comprising:
a housing (10) being flat and having:
a top cover (11) having:
a top;
two lateral sides;
a front side;
an open bottom; and
a bottom cover (12) mounted in the open bottom of the top cover (11) and having a top;
a circuit board (20) mounted inside the housing (10), and located between the top cover (11) and the bottom cover (12);
a lens (30) mounted in the lens-mounting portion (13) of the housing (10);
and
a connector assembly (40) having a second connection interface (42), a connection cord (41) and a plug (43) electrically connected to one another;
**characterized in that**
the top cover (11) of the housing (10) further has:
a lens-mounting portion (13) formed on the top of the top cover (11) opposite to the open bottom;
two side wings (14) formed on and protruding transversely from the respective lateral sides of the top cover (11), each side wing (14) having a sticking plaster (140) formed on a top of the side wing (14); and
a first connection interface (15) mounted on the front side of the top cover (11);
the circuit board (20) has:
a photo-sensing element (21); and
a protection shield (22) mounted on the circuit board (20);
the lens (30) is aligned with the photo-sensing element (21) on the circuit board (20); and
the second connection interface (42) of the connector assembly (40) is connected to the first connection interface (15) of the housing (10).

2. The vehicular video-recording module as claimed in claim 1, wherein the lens-mounting portion (13) has:
a receiving chamber (131) formed in the top of the top cover (11) and defined by a wall;
a mounting hole (130) being a threaded hole and formed through the receiving chamber (131) and the top cover (11) to communicate with the open bottom of the top cover (11); and
a flange wall (132) formed on and protruding upwardly from a top of the wall defining the receiving chamber (131); and
the lens (30) has:
an assembly part (31) formed on one end of the lens (30), being externally threaded, and engaging the mounting hole (130) of the lens-mounting portion (13) so that the lens (30) is located within the receiving chamber (131); and
a lens-fixing ring (32) mounted on the lens (30) and securely combined with the flange wall (132) of the lens-mounting portion (13).

3. The vehicular video-recording module as claimed in claim 2, wherein a sealing adhesive (33) is filled between the lens (30) and the flange wall (132).

4. The vehicular video-recording module as claimed in claim 3, wherein an inner wall of the lens-fixing ring (32) and a periphery of the lens (30) are spaced apart from each other by a gap.

5. The vehicular video-recording module as claimed in any one of claims 1 to 4, wherein
the bottom cover (12) is rectangular and has:
four corners;
two engagement columns (121) formed on and protruding upwardly from two opposite corners among the four corners on the top of the bottom cover (12); and
a foolproof pin (122) formed on and protruding from one of the corners on the top of the bottom cover (12); and
the circuit board (20) is rectangular and has:
four corners;
two unfilled corners (201) respectively formed on and recessed inwardly from two opposite corners among the four corners of the circuit board (20); and
a foolproof hole (202) formed through one of the corners of the circuit board (20);
wherein the unfilled corners (201) of the circuit board (20) respectively abut against the engagement columns (121) of the bottom cover (12), and the foolproof pin (122) of the bottom cover (12) is mounted in the foolproof hole (202) of the circuit board (20).

6. The vehicular video-recording module as claimed in claim 5, wherein the bottom cover (12) has a sidewall (120) formed around an edge portion on the top of the bottom cover (12) and being inserted into the open bottom of the top cover (11) to engage the bottom cover (12) and the top cover (11).

7. The vehicular video-recording module as claimed in claim 6, wherein the bottom cover (12) has multiple stand-mounting holes (124) formed in a bottom of the bottom cover (12).

## Amended claims

### Amended claims in accordance with Rule 137(2) EPC.

**1.** A vehicular video-recording module comprising:
a housing (10) being flat and having:
a top cover (11) having:
a top;
two lateral sides;
a front side;
an open bottom; and
a lens-mounting portion (13) formed on the top of the top cover (11) opposite
to the open bottom; and
a bottom cover (12) mounted in the open bottom of the top cover (11) and having a top;
a circuit board (20) mounted inside the housing (10), and located between the top cover (11) and the bottom cover (12);
a lens (30) mounted in the lens-mounting portion (13) of the housing (10); and
a connector assembly (40) having a second connection interface (42), a connection cord (41) and a plug (43) electrically connected to one another;
**characterized in that**
the top cover (11) of the housing (10) further has:
two side wings (14) formed on and protruding transversely from the respective lateral sides of the top cover (11), each side wing (14) having a sticking plaster (140) formed on a top of the side wing (14); and
a first connection interface (15) mounted on the front side of the top cover (11);
the circuit board (20) has:
a photo-sensing element (21); and
a protection shield (22) mounted on the circuit board (20);
the lens (30) is aligned with the photo-sensing element (21) on the circuit board (20); and
the second connection interface (42) of the connector assembly (40) is connected to the first connection interface (15) of the housing (10).

**2.** The vehicular video-recording module as claimed in claim 1, wherein
the lens-mounting portion (13) has:
a receiving chamber (131) formed in the top of the top cover (11) and defined by a wall;
a mounting hole (130) being a threaded hole and formed through the receiving chamber (131) and the top cover (11) to communicate with the open bottom of the top cover (11); and
a flange wall (132) formed on and protruding upwardly from a top of the wall defining the receiving chamber (131); and
the lens (30) has:
an assembly part (31) formed on one end of the lens (30), being externally threaded, and engaging the mounting hole (130) of the lens-mounting portion (13) so that the lens (30) is located within the receiving chamber (131); and
a lens-fixing ring (32) mounted on the lens (30) and securely combined with the flange wall (132) of the lens-mounting portion (13).

**3.** The vehicular video-recording module as claimed in claim 2, wherein a sealing adhesive (33) is filled between the lens (30) and the flange wall (132).

**4.** The vehicular video-recording module as claimed in claim 3, wherein an inner wall of the lens-fixing ring (32) and a periphery of the lens (30) are spaced apart from each other by a gap.

**5.** The vehicular video-recording module as claimed in any one of claims 1 to 4, wherein
the bottom cover (12) is rectangular and has:
four comers;
two engagement columns (121) formed on and protruding upwardly from two opposite corners among the four corners on the top of the bottom cover (12); and
a foolproof pin (122) formed on and protruding from one of the corners on the top of the bottom cover (12); and
the circuit board (20) is rectangular and has:
four comers;
two unfilled corners (201) respectively formed on and recessed inwardly from two opposite corners among the four corners of the circuit board (20); and
a foolproof hole (202) formed through one of the corners of the circuit board (20);
wherein the unfilled corners (201) of the circuit board (20) respectively abut against the engagement columns (121) of the bottom cover (12), and the foolproof pin (122) of the bottom cover (12) is mounted in the foolproof hole (202) of the circuit board (20).

**6.** The vehicular video-recording module as claimed in claim 5, wherein the bottom cover (12) has a sidewall (120) formed around an edge portion on the top of the bottom cover (12) and being inserted into the open bottom of the top cover (11) to engage the bottom cover (12) and the top cover (11).

**7.** The vehicular video-recording module as claimed in claim 6, wherein the bottom cover (12) has multiple stand-mounting holes (124) formed in a bottom of the bottom cover (12).
